# EUROPEAN PATENT APPLICATION

(11) **EP 3 412 479 A1**
(43) Date of publication of application: **12.12.2018**
(21) Application number: 17747786.6
(22) Date of filing: 03.02.2017
(51) Int. Cl.: B60G 7/00, F16C 11/06, B29C 43/52, B29C 45/14

(54) **BALL JOINT AND MANUFACTURING METHOD THEREFOR**

(30) Priority: 04.02.2016 KR 20160014319
(71) Applicant: Iljin Co., Ltd., Gyeongju-si, Gyeongsangbuk-do 38073 (KR)
(72) Inventor: KWON, Ig Jin, Gyeongju-si Gyeongsangbuk-do 38051 (KR); JEONG, Se Woong, Ulsan 44750 (KR); KWON, Hyuk, Seoul 05409 (KR)
(74) Representative: BRP Renaud & Partner mbB Rechtsanwälte Patentanwälte Steuerberater
(86) International application number: PCT/KR2017/001204
(87) International publication number: WO 2017/135741

(57) **Abstract**

There is provided a ball joint comprising a ball stud including a ball; a bearing configured to enclose and support the ball of the ball stud; a ball joint case configured to accommodate a portion of the ball stud and the bearing, the ball joint case being made of a plastic material; and a ball joint mounting case configured to accommodate the ball joint case and fastened to a suspension arm, wherein the ball joint mounting case is made of a carbon fiber-reinforced plastic (CFRP).

## Description

### TECHNICAL FIELD

The present disclosure relates to a ball joint and a manufacturing method thereof, and more particularly, to a ball joint that is manufactured using a hot press molding method of a carbon fiber-reinforced plastic (CFRP) and a plastic injection molding method and to a manufacturing method of such a ball joint.

### BACKGROUND

Generally, a suspension of a vehicle is an apparatus for connecting a vehicle body and a wheel, and includes a spring for absorbing vibration or shock transmitted from a road surface to the vehicle body, a shock absorber for adjusting the operation of the spring, a suspension arm or link for controlling the operation of a wheel, and so on.

For the suspension arm or link or the like of the suspension as described above, a ball universal joint or a ball joint, a bush, and so on are used in order to connect the suspension to the vehicle body or the wheel such that the suspension is movable relative to the vehicle body or the wheel.

For example, one end of a lower control arm that supports a lateral force, a longitudinal force, and a vertical force input through the wheel during running of the vehicle is connected to a knuckle fastened in to the wheel via a ball joint in order to steer the wheel, and the other end of the lower control arm is connected to the vehicle body through a bush.

The above-described conventional ball joint has a structure in which the ball of a ball stud is rotatably inserted into a housing, and includes a ball stud having a ball made of a rigid body, a housing or a ball joint case enclosing the ball stud, a bearing interposed between the housing and the ball of the ball stud so as to make the ball stud freely movable, a dust cover that prevents foreign matter from infiltrating into the housing, and a ball joint mounting case that accommodates the ball joint case and is mounted on a lower control arm.

The mounting cases of such conventional ball joints, which were used, were made of a steel material. However, recently, for the purpose of improving the fuel efficiency of a vehicle, the mounting cases of ball joints have been manufactured through a forging method using lightweight aluminum, rather than steel.

However, because weight reduction of the ball joints, which are used in vehicles in large numbers, can further improve the fuel efficiency of a vehicle, development of a ball joint having further reduced weight has become necessary.

### SUMMARY

The present disclosure has been made in view of the above circumstances, and the present disclosure provides a ball joint and a method of manufacturing the ball joint, in which a more effective weight reduction can be achieved and durability can also be enhanced.

A ball joint according to an embodiment of the present disclosure may include: a ball stud; a bearing configured to enclose and support the ball of the ball stud; a ball joint case configured to accommodate a portion of the ball stud and the bearing, the ball joint case being made of a plastic material; and a ball joint mounting case configured to accommodate the ball joint case and fastened to a suspension arm, the ball joint mounting case being made of a carbon fiber-reinforced plastic (CFRP).

In an embodiment, the ball joint may further include: a dust cover configured to cover an upper portion of the ball joint case and an upper portion of the ball joint mounting case; and a ring clip configured to fix the dust cover to the ball joint mounting case.

In an embodiment, one or more bolt mounting bushes may be inserted into and integrally coupled to the ball joint mounting case.

In an embodiment, the suspension arm is a lower control arm, and the ball joint mounting case may be mounted on one end of the lower control arm.

A manufacturing method of a ball joint according to another embodiment of the present disclosure may include: integrally coupling one or more bolt mounting bushes to a ball joint mounting case; manufacturing a ball stud including a ball; manufacturing a bearing; coupling the bearing to the ball stud so as to enclose the ball; and integrally coupling an assembly of the ball stud and the bearing to the ball joint mounting case.

In an embodiment, the ball joint mounting case may be made of a carbon fiber-reinforced plastic.

In an embodiment, the ball joint mounting case may be manufactured with the carbon fiber-reinforced plastic by a hot press molding method.

In an embodiment, the ball joint mounting case may be manufactured by manufacturing a charge having a product shape, using carbon chips, inserting the charge into a mold, and applying heat and pressure to the charge.

In an embodiment, the carbon chips may be chips cut from a prepreg (UD tape) or a tow prepreg.

In an embodiment, the carbon chips may be made of a mixture of carbon fibers and an epoxy resin.

In an embodiment, in a step of the integrally coupling of the assembly of the ball stud and the bearing to the ball joint mounting case, the ball joint mounting case and the assembly may be inserted into a mold, and a plastic resin may be injection molded.

In an embodiment, the plastic resin may be interposed between the ball joint mounting case and the assembly so as to form a ball joint case.

In an embodiment, the method may further include covering the ball stud with a dust cover and then fixedly fitting a ring clip on the dust cover.

In an embodiment, in the coupling of the bearing to the ball stud so as to enclose the ball, lubricant may be injected.

In an embodiment, in the step of the covering of the ball stud with the dust cover and then the fixedly fitting of the ring clip on the dust cover, lubricant may be injected.

As described above, according to the ball joint and the method of manufacturing the ball joint according to an embodiment of the present disclosure, the ball joint mounting case is made of a carbon fiber-reinforced plastic by a hot press molding method, and the ball joint case is injection molded using a plastic material. Thus, it is possible to reduce the weight by 40% or more compared with a conventional ball joint made of a steel material, and the fuel efficiency of the vehicle can be further improved when the ball joint of the embodiment of the present disclosure is applied to a vehicle.

In addition, since the ball stud and the bearing are inserted into the inside of the ball joint mounting case, the ball joint case is injection molded. Thus, high strength, high durability, and impact resistance can be further improved. In addition, when the ball joint is applied to a suspension arm such as a lower control arm of a vehicle, the steering performance and ride comfort of the vehicle can be improved.

Further, since a layout pattern design is unnecessary, the ball joint can be designed and analyzed easily, and since a lamination process according to the layout pattern is not required, the manufacturing time of a component of a composite material can be remarkably shortened and the productivity can be improved.

In addition, since the bolt mounting bush made of a metal is inserted into the ball joint mounting case so as to be integrally molded, the durability can be improved more effectively, and layout can be secured easily.

### BRIEF DESCRIPTION OF THE DRAWINGS

FIG. 1 is a perspective view of a ball joint according to an embodiment of the present disclosure.
FIG. 2 is a bottom side perspective view of the ball joint according to the embodiment of the present disclosure.
FIG. 3 is a cross-sectional view of the ball joint according to the embodiment of the present disclosure.
FIG. 4 is a perspective view of a lower control arm equipped with the ball joint according to the embodiment of the present disclosure.
FIG. 5 is an explanatory view illustrating a process for manufacturing a ball joint mounting case through a manufacturing method according to an embodiment of the present disclosure.
FIG. 6 is an explanatory view of a process of injection molding a plastic resin through the manufacturing method according to the embodiment of the present disclosure.
FIG. 7 is an explanatory diagram of a ball joint manufacturing method according to an embodiment of the present disclosure.

### DETAILED DESCRIPTION

Hereinafter, embodiments of the present disclosure will be described in detail with reference to the accompanying drawings.

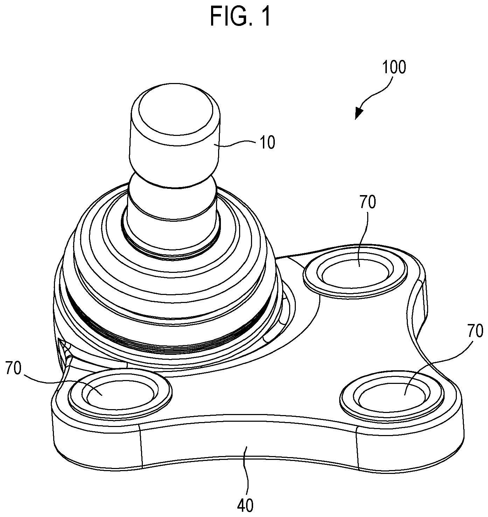

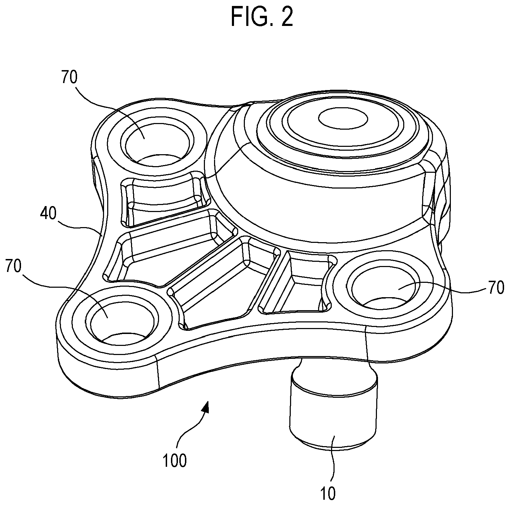

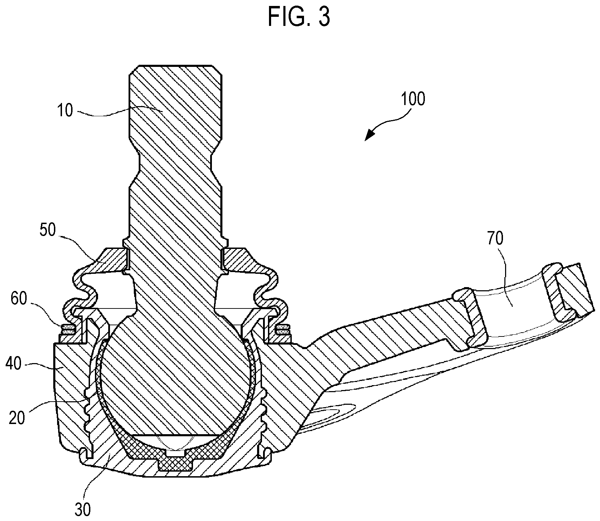

Referring to FIGS. 1 to 3, a ball joint 100 according to an embodiment of the present disclosure may include: a ball stud 10 made of a rigid body and having a ball; a bearing 20 that encloses the ball of the ball stud 10 and rotatably supports the ball stud 10; a ball joint case 30 that accommodates a portion of the ball stud 10 and the bearing 20; a ball joint mounting case 40 that accommodates the ball joint case 30 and is fastened to a suspension arm (not illustrated); a dust cover 50 that covers the upper portions of the ball joint case 30 and the ball joint mounting case 40 so as to prevent foreign matter from infiltrating into the case 40; and a ring clip 60 that fixes the dust cover 50 to the ball joint mounting case 40.

One or more bolt mounting bushes 70 may be inserted into and integrally coupled to the ball joint mounting case 40.

The ball joint case 30 may be molded using a plastic material, and the ball joint mounting case 40 may be molded using a CFRP.

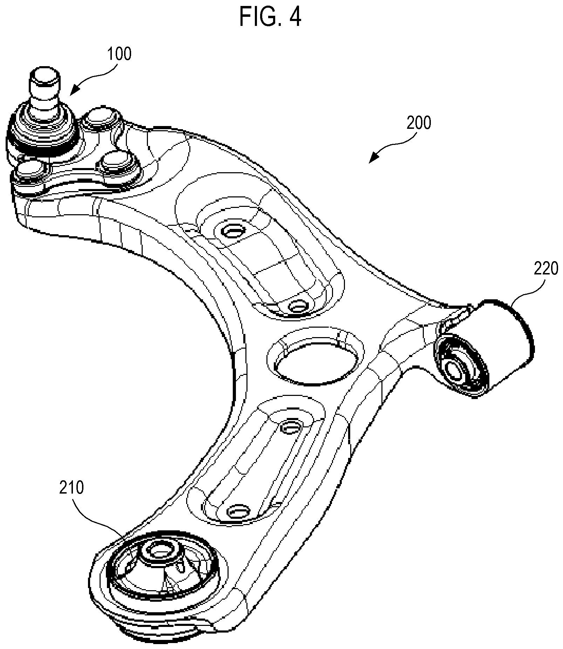

Referring to FIG. 4, the ball joint 100 according to the embodiment of the present disclosure may be mounted on one end of a suspension arm of a vehicle, for example, one end of a lower control arm 200.

That is, the ball joint 100 may be mounted on one end of the lower control arm 200, a first bush 210 may be mounted on the other end of the lower control arm 200, and a second bush 220 may be mounted on a predetermined portion between the ball joint 100 and the first bush 210.

The lower control arm 200 may be connected to a knuckle of a wheel (not illustrated) through the ball joint 100, and the first and second bushes 210 and 220 may be fastened to a vehicle body (not illustrated), so that the wheel can be supported by the vehicle body through the lower control arm 200.

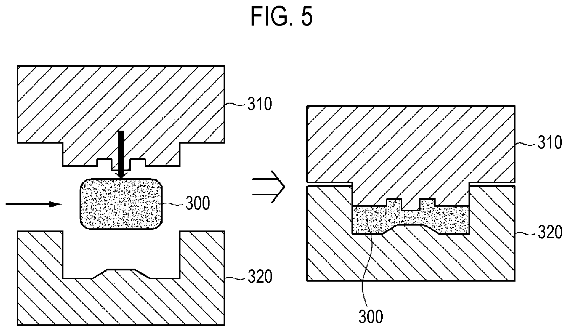

Referring to FIG. 5, the ball joint mounting case 40 may be made of a CFRP using a hot press molding method.

That is, the ball joint mounting case 40 can be manufactured by manufacturing a charge 300 having a product shape, using carbon chips first, inserting the charge 300 inserted into an upper mold 310 and a lower mold 320, and then closing the upper cover 310 such that heat and pressure are applied to the charge 300.

At this time, it is possible to integrally mold the bolt mounting bush 70 with the joint mounting case 40 by inserting the bolt mounting bush into the mold together with the ball joint mounting case 40.

As the carbon chips, carbon chips cut from a prepreg (UD tape) or a tow prepreg may be used.

The carbon chips may be made using a mixture of carbon fiber (carbon fiber) and an epoxy resin (fast cure epoxy resin).

The size of the carbon chips may be 10 mm to 80 mm in length and 3 mm to 30 mm in width.

The weight of the prepreg (prepreg areal weight) may be 100 to 300 gsm (gram per square meter).

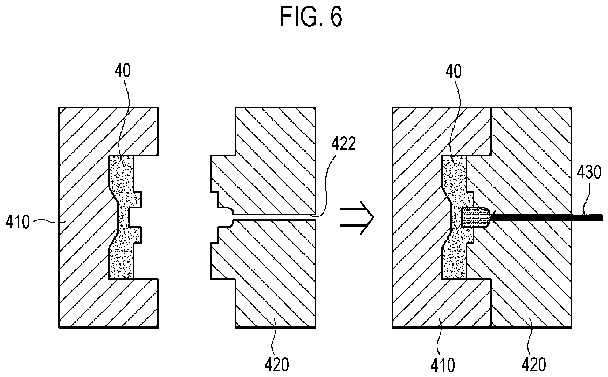

Referring to FIG. 6, the ball joint 100 may be manufactured by inserting the ball joint mounting case 40 molded as described above into an upper mold 410, and injecting a molten plastic resin 430 through an injection path 422 formed in a lower mold 420 in the state in which the upper mold 410 is matched and closed with the lower mold 420.

At this time, an assembly of the ball stud and the bearing is inserted into the ball joint mounting case 40 and the plastic resin is filled and solidified in a gap between the assembly of the ball stud and the bearing and the ball joint mounting case 40. Thus, the assembly of the ball stud and the bearing and the joint mounting case 40 can be integrally joined by the solidified plastic resin.

The solidified plastic resin forms the ball joint case 30.

Then, the ball joint 100 according to the embodiment of the present disclosure is completed by covering the ball stud 10 with a dust cover 50, and then fixedly fitting a ring clip 60 on the dust cover 50.

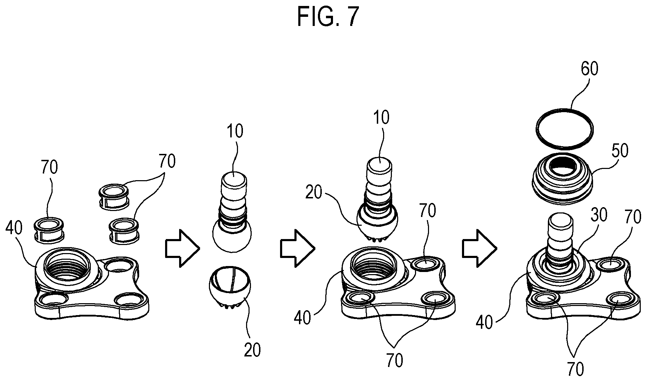

That is, as illustrated in FIG. 7, when molding the ball joint mounting case 40, the bolt mounting bush 70 is inserted and molded, then each of the ball stud 10 and the bearing 20 is manufactured, and then the ball stud 10 and the bearing 20 are assembled with each other. At this time, lubricant such as grease is previously applied to the inner face of the bearing 20 so as to improve lubrication performance.

Then, the assembly of the ball stud 10 and the bearing 20 is inserted into the ball joint mounting case 40, and the plastic resin is injection molded so as to integrally couple the assembly and the ball joint mounting case 40. Finally, the upper portion of the ball stud 10 is covered with the dust cover 50 and the dust cover 50 is fixed by the ring clip 60, and lubricant is injected as needed, thereby manufacturing the ball joint 100.

While embodiments of the present disclosure have been described, the present disclosure is not limited to the embodiments, and includes all modifications that are easily made by those skilled in the art to which the present disclosure belongs and are thus deemed equivalent to the present disclosure.

## Claims

1. A ball joint comprising:
a ball stud including a ball;
a bearing configured to enclose and support the ball of the ball stud;
a ball joint case configured to accommodate a portion of the ball stud and the bearing, the ball joint case being made of a plastic material; and
a ball joint mounting case configured to accommodate the ball joint case and fastened to a suspension arm, the ball joint mounting case being made of a carbon fiber-reinforced plastic (CFRP).

2. The ball joint of claim 1, further comprising:
a dust cover configured to cover an upper portion of the ball joint case and an upper portion of the ball joint mounting case; and
a ring clip configured to fix the dust cover to the ball joint mounting case.

3. The ball joint of claim 1, further comprising:
one or more bolt mounting bushes are inserted into and integrally coupled to the ball joint mounting case.

4. The ball joint of claim 1, wherein the suspension arm is a lower control arm, and the ball joint mounting case is mounted on one end of the lower control arm.

5. A method of manufacturing a ball joint, the method comprising:
integrally coupling one or more bolt mounting bushes to a ball joint mounting case;
manufacturing a ball stud including a ball and a bearing and coupling the bearing to the ball stud so as to enclose the ball; and
integrally coupling an assembly of the ball stud and the bearing to the ball joint mounting case.

6. The method of claim 5, wherein the ball joint mounting case is made of a carbon fiber-reinforced plastic (CFRP).

7. The method of claim 6, wherein the ball joint mounting case is manufactured with the carbon fiber-reinforced plastic by a hot press molding method.

8. The method of claim 5, wherein the ball joint mounting case is manufactured by manufacturing a charge having a product shape, using carbon chips, inserting the charge into a mold, and applying heat and pressure to the charge.

9. The method of claim 8, wherein the carbon chips are cut from a prepreg (UD tape) or a tow prepreg.

10. The method of claim 8, wherein the carbon chips are made of a mixture of carbon fibers and an epoxy resin.

11. The method of claim 5, wherein, in a step of the integrally coupling of the assembly of the ball stud and the bearing to the ball joint mounting case, the ball joint mounting case and the assembly are inserted into a mold, and a plastic resin is injection molded.

12. The method of claim 11, wherein the plastic resin is interposed between the ball joint mounting case and the assembly so as to form a ball joint case.

13. The method of claim 5, further comprising:
a step of covering the ball stud with a dust cover and then fixedly fitting a ring clip on the dust cover.

14. The method of claim 5, wherein, in the coupling of the bearing to the ball stud so as to enclose the ball, lubricant is injected.

15. The method of claim 13, wherein, in the step of covering the ball stud with the dust cover and then fixedly fitting the ring clip on the dust cover, lubricant is injected.
